# EUROPEAN PATENT APPLICATION

(11) **EP 2 636 502 A1**
(43) Date of publication of application: **11.09.2013**
(21) Application number: 11838144.1
(22) Date of filing: 19.07.2011
(51) Int. Cl.: B29C 44/06, C08G 18/06, C08L 75/06, B32B 27/08

(54) **COMPOSITE ELASTIC LAYER BLOCK MAT FOR ENHANCING ELASTICITY AND ADHESIVE FORCE, AND MANUFACTURING METHOD THEREOF**

(30) Priority: 03.11.2010 KR 20100108567
(71) Applicant: Kim, Jihoon, Dalseong-gu, Daegu 711-851 (KR)
(72) Inventor: Kim, Jihoon, Dalseong-gu, Daegu 711-851 (KR)
(74) Representative: Lampis, Marco
(86) International application number: PCT/KR2011/005304
(87) International publication number: WO 2012/060539

(57) **Abstract**

The present invention relates to a method for manufacturing a block mat having a composite elastic layer and a composite elastic layer block mat manufactured by the method. More specifically, the invention relates to a method for manufacturing a composite elastic layer block mat having an upper layer manufactured in a liquid phase for enhancing elasticity and adhesive force, and a composite elastic layer block mat manufactured by the method. The composite elastic layer block mat manufactured by the method of the invention has excellent elasticity, an inherent object of the block mat, as well as excellent durability by enhancing interlayer adhesive force.

## Description

### CROSS-REFERENCE TO RELATED APPLICATION

This application claims the benefit of Korean Patent Application No.10-2010-0108567, filed on November 3, 2010 in the Korean Intellectual Property Office, the disclosure of which is incorporated herein by reference.

### TECHNICAL FIELD

The present invention relates to a method for manufacturing a block mat with a composite elastic layer and a composite elastic layer block mat manufactured according to the method, and more particularly, a method for manufacturing a composite elastic layer block mat having an upper layer in a liquid phase so as to enhance elasticity and adhesive force, and a composite elastic layer block mat manufactured according to the method.

### BACKGROUND ART

In recent time, methods for applying a block mat with elasticity onto various types of bottom surfaces depending on the purpose of use have been developed.

Such block mat is manufactured by first melting waste vinyl, molding the melted vinyl into a block with a desired shape, adding resin onto an upper portion of the molded block and injecting the resin-added molded block into an injector. However, most of the blocks manufactured do not maintain desired elasticity.

Also, the addition of the resin onto the upper portion of the block which is made by melting the waste vinyl, such as polyurethane, polyethylene, PVC and the like, may lower an adhesive force between the block and the resin, which causes the two layers to be separated from each other.

To solve the problem, a product has been developed by attempting to adhere a copper layer and a waste vinyl layer with each other. However, even in this case, the separation between the copper layer and the waste vinyl layer has not been solved.

### DISCLOSURE

### Technical Problem

The present invention has been made keeping in mind the drawbacks of the related art, and an object of the invention is provide a method for manufacturing a composite elastic layer block mat, capable of simultaneously satisfying both reduction of manufacturing costs and productivity, by preparing a composition in a liquid phase having configuration and manufacturing steps characterized by the present disclosure in order to enhance an adhesive force between an upper layer and a lower layer, and pressing the upper layer and the lower by a low temperature press of 50 to 80°C, other than a high temperature press, and a composite elastic layer block mat manufactured according to the method.

### Technical Solution

In order to achieve the above object,

The present disclosure provides a method for manufacturing a composite elastic layer block mat having an upper layer and a lower layer, the method including manufacturing the upper layer sequentially by mixing 80 to 200 parts by weight of polyetherpolyol (molecular weight of triol is 600∼1000), 150 to 300 parts by weight of polyetherpolyol (molecular weight of diol is 1000-3000), 0.1 to 0.4 parts by weight of anti-forming agent, 0.2 to 1 part by weight of antioxidant, 0.2 to 1 part by weight of UV stabilizer, 0.1 to 0.4 parts by weight of stannous catalyst, and 0.5 to 2 parts by weight of coloring pigment and stirring the mixture for 1 to 2 hours so as to prepare a main mixture, mixing and reacting 100 to 250 parts by weight of methylenebis phenyl diisocyanate, 50 to 500 parts by weight of polyetherpolyol (molecular weight of triol is 400-2000) and 50 to 500 parts by weight of polyetherpolyol (molecular weight of diol is 400∼3000) so as to prepare a curing agent, mixing 1 to 9 parts by weight of the main mixture and 1 to 3 parts by weight of the curing agent, pouring the mixture by a thickness of 5 to 10 mm in a mold being vibrated with being installed on a ultrasonic vibrator, and putting the lower layer in the mold at the time point when the mixture is cured up to 3 to 5 mm thick from the bottom of the mold.

The method may further include forming an intermediate layer by pouring onto the upper layer a mixture, in which 100 parts by weight of waste robber powder with a diameter of 1 to 3 mm and 10 to 30 parts by weight of urethane binder are mixed, to have a thickness of 10 to 25 mm.

The lower layer may be manufactured sequentially by mixing 70 to 90 parts by weight of resin mixture, in which 10 to 90% by weight of waste vinyl and 10 to 90% by weight of waste thermoplastic resin are mixed with each other, 5 to 20 parts by weight of calcium carbonate, 5 to 15 parts by weight of activator (mixed with 50% by weight of monoester, 35% by weight of diester and 15% by weight of triester) and 5 to 15 parts by weight of reformed azodicarbonamide (ADCA) foaming agent, allowing the mixture to pass through an extruding machine of 180 to 250°C to prepare a foam with a weight of 1.3 to 1.7, reforming the foam, putting the reformed foam into a molding machine to form protrusions which are 10 to 20 mm long on one surface of the foam, pressing end portions of the protrusions with a heating iron to form knobs, putting the resultant into a heater of 80 to 100°C to be thermally expanded, and placing the foam, which is in the thermally expanded state, on the upper layer or the intermediate layer in the mold frame.

The manufacturing method may further include processing a portion of the lower layer, which comes in contact with the upper layer or the intermediate layer, using a primer, prior to placing the lower layer into the mold frame.

The lower layer may be manufactured sequentially by pushing a nylon cord material which is generated while grinding waste tire into an inlet of an extruding/regenerating machine of 200 to 300°C at speed of 250 to 500 kg/h, followed by applying heat thereto to generate a liquid phase, inserting the nylon cord material in the liquid phase through a punched net with a plurality of holes of 2 to 10 mm, mounted onto an outlet of the extruding/regenerating machine, to be discharged into a shape of noodle, water-cooling the noodle-shaped nylon cord material into pellets or chips of 1 to 10 mm in size, mixing 5 to 40% by weight of the nylon cord pellets or chips which are 1 to 10 mm great, 50 to 90% by weight of robber which is 1 to 10 mm great and 3 to 25% by weight of 1-component or 2-component binder to prepare a foam, reforming the foam, putting the reformed foam into a molding machine to obtain a molded product with compact protrusions on its one surface, putting the molded product into a heater of 80 to 100°C to be thermally expanded, and placing the molded product in the thermally expanded state in the mold frame such that a portion having the compact protrusions comes in contact with the upper layer.

The lower layer may be manufactured sequentially by pouring in a molding machine a mixture containing 60 to 80% by weight of robber powder of 5 to 7 mm, 10 to 30% by weight of robber powder of 2 to 3 mm and 7 to 20% by weight of phenolic resin in a shape of 150-200 mesh, which is melted at 60 to 80°C, so as to obtain a molded product with compact protrusions on its one surface, putting the molded product into a heater of 80 to 100°C to be thermally expanded, placing the molded product in the thermally expanded state in the mold frame such that a portion of the molded product with the compact protrusions comes in contact with the upper layer.

The lower layer may be manufactured sequentially by pouring in a molding machine a mixture containing 100 parts by weight of robber powder of 5 to 7 mm and 5 to 15 parts by weight of urethane-based binder, so as to obtain a molded product with compact protrusions on its one surface, putting the molded product into a heater of 80 to 100°C to be thermally expanded, and placing the molded product in the thermally expanded state in the mold frame such that a portion of the molded product with the compact protrusions comes in contact with the upper layer.

The lower layer may be manufactured sequentially by pouring into a molding machine a mixture containing 80 to 90% by weight of sand of 2 to 7 mm and 10 to 20% by weight of phenolic resin in a shape of 150-200 mesh, which is melted at 60 to 80°C, so as to obtain a molded product with compact protrusions on its one surface, putting the molded product into a heater of 80 to 100°C to be thermally expanded, and placing the molded product in the thermally expanded state in the mold frame such that a portion of the molded product having the compact protrusions comes in contact with the upper layer.

The lower layer may be manufactured sequentially by pouring into a molding machine a mixture containing 100 parts by weight of sand of 2 to 7 mm and 10 to 30 parts by weight of cement, 10 to 30 parts by weight of water-soluble acryl resin and 10 to 30 parts by weight of water, so as to obtain a molded product with compact protrusions on its one surface, putting the molded product into a heater of 80 to 100°C to be thermally expanded, placing the molded product in the thermally expanded state in the mold frame such that a portion of the molded product having the compact protrusions comes in contact with the upper layer.

The method may further include adhering a robber magnet or a ceramic permanent magnet onto the upper layer at the time point that the upper layer within the mold frame is cured by 2 to 3 mm.

The method may further include adhering a wire or iron powders onto the upper layer at the time point that the upper layer within the mold frame is cured by 2 to 3 mm.

The method may further include adhering a memory chip onto the upper layer at the time point that the upper layer within the mold frame is cured by 2 to 3 mm.

The method may further include adhering an RFID/USN tag onto the upper layer at the time point that the upper layer within the mold frame is cured by 2 to 3 mm.

Also, the present disclosure may provide a composite elastic layer block mat manufactured by the method.

### Advantageous Effects

A composite elastic layer block mat manufactured according to a method of the present disclosure may exhibit excellent elasticity, an inherent object of the block mat, as well as superior durability by enhancing interlayer adhesive force. Also, the use of a low temperature press may be effective in view of productivity.

### DESCRIPTION OF DRAWINGS

FIG. 1 is a view showing a state that a liquid upper layer is filled in a mold frame in accordance with the present disclosure;

FIG. 2 is a view showing a lower layer with protrusions;

FIG. 3 is a view showing the lower layer with knobbed protrusions;

FIG. 4 is a view showing a front surface and a planar surface of the lower layer with the knobbed protrusions;

FIG. 5 is a view showing a state that the upper layer and the lower layer with the knobbed protrusions are adhered onto each other and filled in the mold frame;

FIG. 6 is a view showing a completely vulcanized product in which the upper layer and the lower layer with the knobbed protrusions are adhered onto each other;

FIG. 7 is a view showing a front surface and a planar surface of a lower layer with compact protrusions;

FIG. 8 is a view showing the lower layer with the compact protrusions;

FIG. 9 is a view showing a state that an upper layer and the lower layer with the compact protrusions are adhered onto each other and filled in a mold frame;

FIG. 10 is a view showing a composite elastic layer block mat in which an upper layer and a lower layer with compact protrusions are adhered onto each other;

FIG. 11 is a view showing that an intermediate layer is poured at the time point when the upper layer filled in the mold frame starts to be cured;

FIG. 12 is a view showing a stacked state of the upper layer, the intermediate layer and the lower layer with the protrusions within the mold frame; and

FIG. 13 is a view showing a complete product obtained by completely adhering the upper layer, the intermediate layer and the lower layer and completing hot vulcanization.

### BEST MODE

Hereinafter, the present disclosure will be described in detail.

The present disclosure provides a method for manufacturing a composite elastic layer block mat having an upper layer and a lower layer, including manufacturing the upper layer sequentially by mixing 80 to 200 parts by weight of polyetherpolyol (molecular weight of triol is 600∼1000), 150 to 300 parts by weight of polyetherpolyol (molecular weight of diol is 1000∼3000), 0.1 to 0.4 parts by weight of anti-forming agent, 0.2 to 1 part by weight of antioxidant, 0.2 to 1 part by weight of UV stabilizer, 0.1 to 0.4 parts by weight of stannous catalyst, and 0.5 to 2 parts by weight of coloring pigment and stirring the mixture for 1 to 2 hours so as to prepare a main mixture, mixing and reacting 100 to 250 parts by weight of methylenebis phenyl diisocyanate, 50 to 500 parts by weight of polyetherpolyol (molecular weight of triol is 400∼2000) and 50 to 500 parts by weight of polyetherpolyol (molecular weight of diol is 400∼3000) so as to prepare a curing agent, mixing 1 to 9 parts by weight of the main mixture and 1 to 3 parts by weight of the curing agent, pouring the mixture by a thickness of 5 to 10 mm in a mold being vibrated with being installed on a ultrasonic vibrator, and putting the lower layer in the mold at the time point when the mixture is cured up to 3 to 5 mm thick from the bottom of the mold.

The upper layer may be a layer which is prepared as a 2-component material (2-liquid type composition) to enhance elasticity of the composite elastic layer block mat and an adhesive force with the lower layer. The lower layer may apply strength to the block mat to retain its shape.

In the method for manufacturing the composite elastic layer block mat having the upper layer and the lower layer, the method may further include forming an intermediate layer by pouring onto the upper layer a mixture, in which 100 parts by weight of waste robber powder with a diameter of 1 to 3 mm and 10 to 30 parts by weight of urethane binder are mixed, to have a thickness of 10 to 25 mm.

With the formation of the intermediate layer, the block mat may have further improved elasticity, and the adhesive force between the upper layer and the lower layer may be maintained more strongly.

After pouring the upper layer and the intermediate layer in the mold frame, the lower layer may be put in the mold frame. Here, the lower layer may be manufactured according to the following method.

As one preferably exemplary embodiment, the lower layer may be manufactured sequentially by mixing 70 to 90 parts by weight of resin mixture, in which 10 to 90% by weight of waste vinyl and 10 to 90% by weight of waste thermoplastic resin are mixed with each other, 5 to 20 parts by weight of calcium carbonate, 5 to 15 parts by weight of activator (mixed with 50% by weight of monoester, 35% by weight of diester and 15% by weight of triester) and 5 to 15 parts by weight of reformed azodicarbonamide (ADCA) foaming agent, allowing the mixture to pass through an extruding machine of 180 to 250°C to prepare a foam with a weight of 1.3 to 1.7, reforming the foam, putting the reformed foam into a molding machine to form protrusions which are 10 to 20 mm long on one surface of the foam, pressing end portions of the protrusions with a heating iron to form knobs, putting the resultant into a heater of 80 to 100°C to be thermally expanded, and placing the foam, which is in the thermally expanded state, on the upper layer or the intermediate layer in the mold frame.

The knobs formed at the end portion of each protrusion of the lower layer may be larger than a diameter of the protrusion. Accordingly, when the knobbed protrusions are inserted in the intermediate layer, the lower layer and the upper layer may be provided with strong adhesive force without being easily separated from each other

As means for further enhancing the adhesion between the upper layer or the intermediate layer and the lower layer, the manufacturing method may further include processing a portion of the lower layer, which comes in contact with the upper layer or the intermediate layer, using a primer, prior to placing the lower layer into the mold frame.

The adhesive force of the primer may further enhance the adhesion between the upper layer or the intermediate layer and the lower layer.

As another detailed exemplary embodiment for manufacturing the lower layer, the lower layer may be manufactured sequentially by pushing a nylon cord material which is generated while grinding waste tire into an inlet of an extruding/regenerating machine of 200 to 300°C at speed of 250 to 500 kg/h, followed by applying heat thereto to generate a liquid phase, inserting the nylon cord material in the liquid phase through a punched net with a plurality of holes of 2 to 10 mm, mounted onto an outlet of the extruding/regenerating machine, to be discharged into a shape of noodle, water-cooling the noodle-shaped nylon cord material into pellets or chips of 1 to 10 mm in size, mixing 5 to 40% by weight of the nylon cord pellets or chips which are 1 to 10 mm great, 50 to 90% by weight of robber which is 1 to 10 mm great and 3 to 25% by weight of 1-component or 2-component binder to prepare a foam, reforming the foam, putting the reformed foam into a molding machine to obtain a molded product with compact protrusions on its one surface, putting the molded product into a heater of 80 to 100°C to be thermally expanded, and placing the molded product in the thermally expanded state in the mold frame such that a portion of the molded product with the compact protrusions comes in contact with the upper layer.

As another detailed exemplary embodiment for manufacturing the lower layer, the lower layer may be manufactured sequentially by pouring in a molding machine a mixture containing 60 to 80% by weight of robber powder of 5 to 7 mm, 10 to 30% by weight of robber powder of 2 to 3 mm and 7 to 20% by weight of phenolic resin in a shape of 150-200 mesh, which is melted at 60 to 80°C, so as to obtain a molded product with compact protrusions on its one surface, putting the molded product into a heater of 80 to 100°C to be thermally expanded, placing the molded product in the thermally expanded state in the mold frame such that a portion of the molded product with the compact protrusions comes in contact with the upper layer.

As another detailed exemplary embodiment for manufacturing the lower layer, the lower layer may be manufactured sequentially by pouring in a molding machine a mixture containing 100 parts by weight of robber powder of 5 to 7 mm and 5 to 15 parts by weight of urethane-based binder, so as to obtain a molded product with compact protrusions on its one surface, putting the molded product into a heater of 80 to 100°C to be thermally expanded, and placing the molded product in the thermally expanded state in the mold frame such that a portion of the molded product with the compact protrusions comes in contact with the upper layer.

As another detailed exemplary embodiment for manufacturing the lower layer, the lower layer may be manufactured sequentially by pouring into a molding machine a mixture containing 80 to 90% by weight of sand of 2 to 7 mm and 10 to 20% by weight of phenolic resin in a shape of 150-200 mesh, which is melted at 60 to 80°C, **so as** to obtain a molded product with compact protrusions on its one surface, putting the molded product into a heater of 80 to 100°C to be thermally expanded, and placing the molded product in the thermally expanded state in the mold frame such that a portion of the molded product having the compact protrusions comes in contact with the upper layer.

As another detailed exemplary embodiment for manufacturing the lower layer, the lower layer may be manufactured sequentially by pouring into a molding machine a mixture containing 100 parts by weight of sand of 2 to 7 mm and 10 to 30 parts by weight of cement may with 10 to 30 parts by weight of water-soluble acryl resin and 10 to 30 parts by weight of water, so as to obtain a molded product with compact protrusions on its one surface, putting the molded product into a heater of 80 to 100°C to be thermally expanded, placing the molded product in the thermally expanded state in the mold frame such that a portion of the molded product having the compact protrusions comes in contact with the upper layer.

A detachable coupling ring may further be provided on each edge portion of the lower layer. The coupling rings may allow lower layers of block mats to be coupled to one another, thereby integrating a plurality of block mats, and also allow bottom surfaces of the block mats with the lower layers integrated to be balanced.

Also, the present disclosure may further include adhering on the upper layer a robber magnet, a ceramic permanent magnet, a wire, iron powders, a memory chip or an RFID/USN tag at the moment when the upper layer in the mold frame is cured by 2 to 3 mm.

Those additives may be provided as members for providing safeties of pedestrians and guide information.

The robber magnet may have a shape of noodle whose diameter is less than 5 mm. The permanent magnet may have a circular shape whose diameter is 3 to 5 mm and thickness is 2 to 4 mm. The permanent magnet may preferably be attached on the upper layer by an interval of 3 to 5 cm.

Also, the wire or the iron powders may preferably be placed on the upper layer by an interval of 2 to 5 mm.

The memory chip may be recharged with solar light or operate by a battery. Information stored in the memory chip and the RFID/USN tag may be wirelessly transmitted to a pedestrian's cane with a reader attached thereonto, contactable with the block mat. Accordingly, the pedestrian can check the corresponding information using the cane or a guiding robot.

Finally, the present disclosure may provide a composite elastic layer block mat according to the manufacturing method.

The composite elastic layer block mat according to the present disclosure may be allowed to prevent separation of each layer of the block mat by way of strong adhesion between the upper layer as an elastic layer and the lower layer as a support layer, and also exhibit high elasticity and strong adhesive force by virtue of excellent elasticity of components of the upper layer.

Hereinafter, the present disclosure will be described in more detail, with reference to the accompanying drawings.

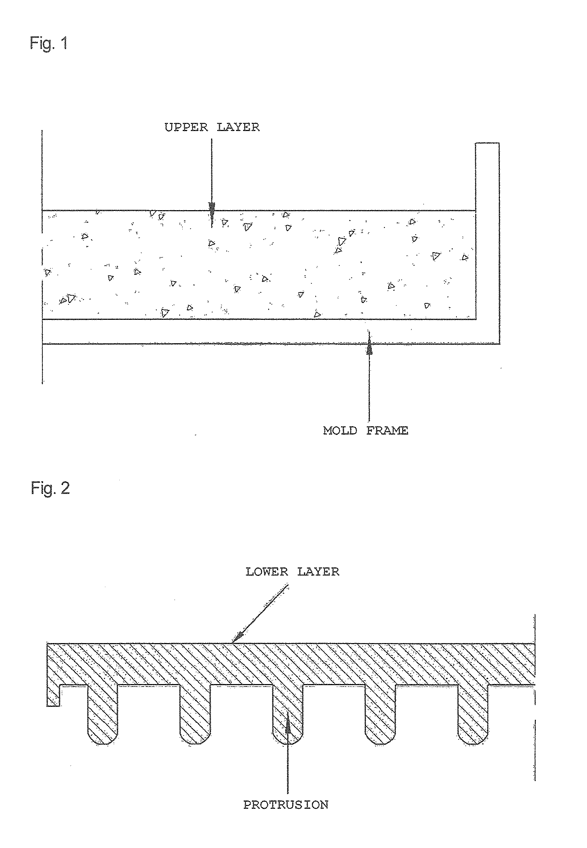

As a preferred exemplary embodiment, an upper layer according to the present disclosure, as shown in FIG. 1, may be a 2-component (2-liquid type) material which is poured onto a bottom of a mold frame.

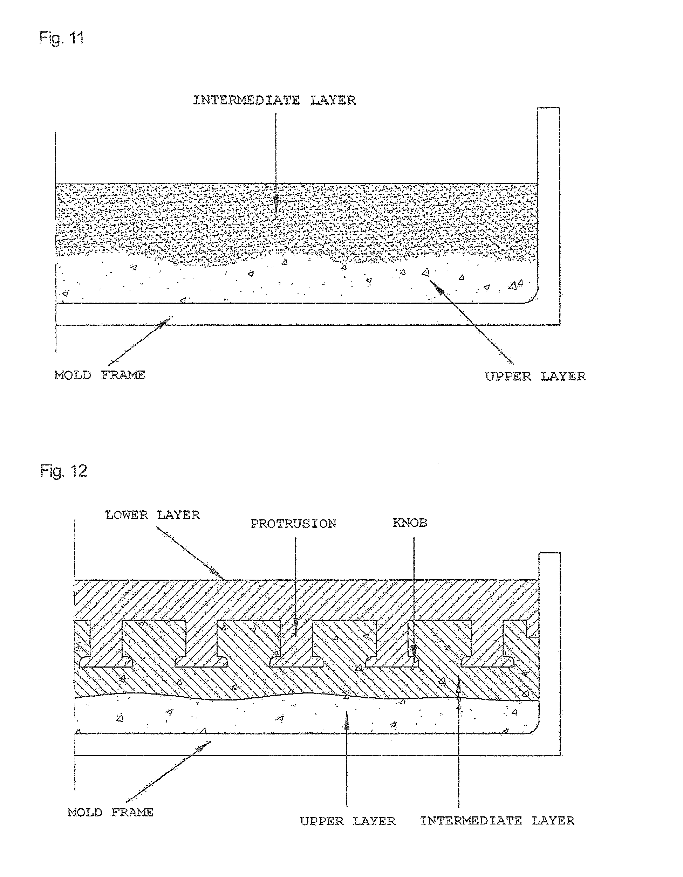

Selectively, intermediate elements forming an intermediate layer may be poured into the mold frame at the time point when the upper layer poured in the mold frame is cured by 3 to 5 mm (see FIG. 11).

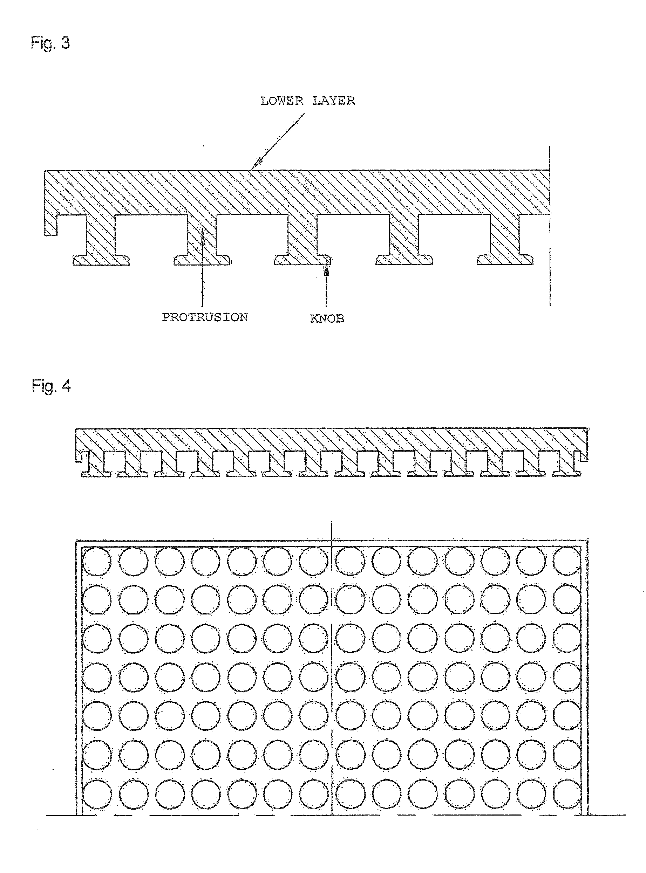

Detailed embodiments for manufacturing a lower layer have been illustrated in FIGS. 2, 3, 4, 7 and 8. The lower layer, as shown in FIG. 2, may be molded to have a plurality of protrusions which are regularly formed on one surface of the lower layer, contacting the intermediate layer. Then, heat may be applied to each end portion of the protrusions so as to be molded into a shape of knob, as shown in FIG. 3. The knobs may serve to enhance an adhesive force between the upper layer or intermediate layer and the lower layer.

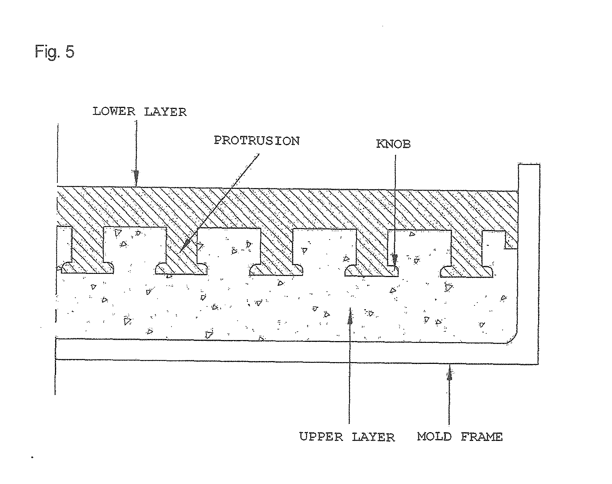

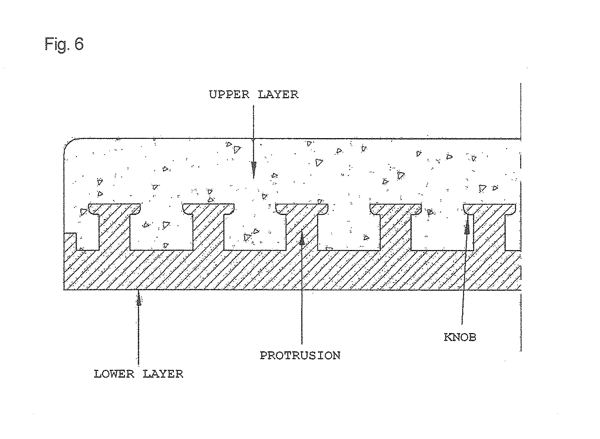

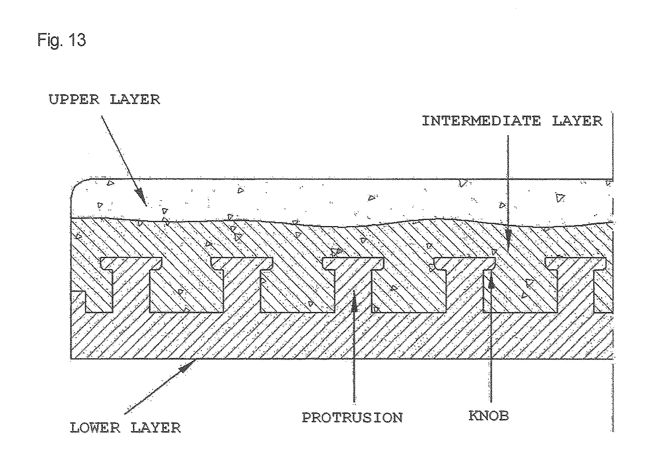

The manufactured lower layer may be cut to correspond to the size of the mold frame, and put into the mold frame having the upper layer or the intermediate layer, as shown in FIG. 5 or FIG. 12. A thermal vulcanization for the block mat which is completely manufactured in the mold frame may be carried out, thereby manufacturing a composite elastic layer block mat having a cross-section as shown in FIG. 6 or FIG. 13.

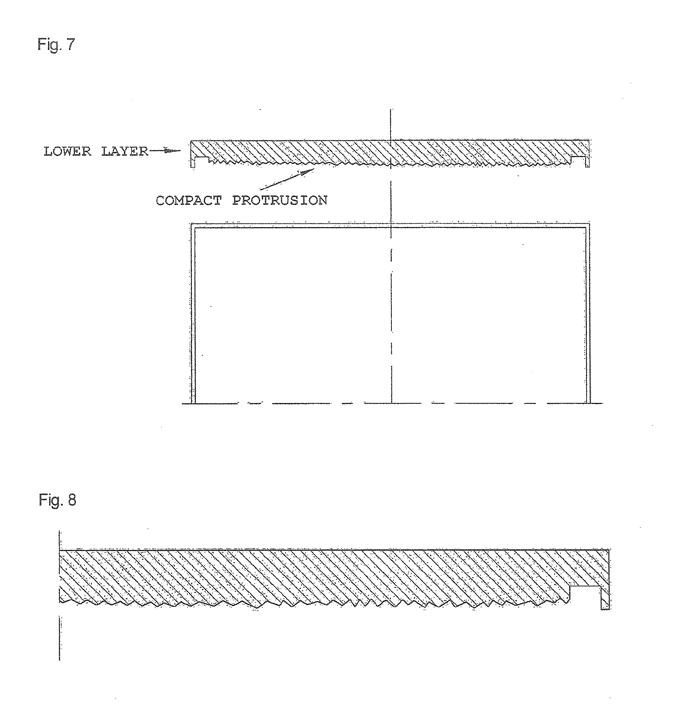

A cross-section shown in FIGS. 7 and 8 is another shape of the lower layer, which has a plurality of compact protrusions irregularly formed on a portion contactable with the upper layer.

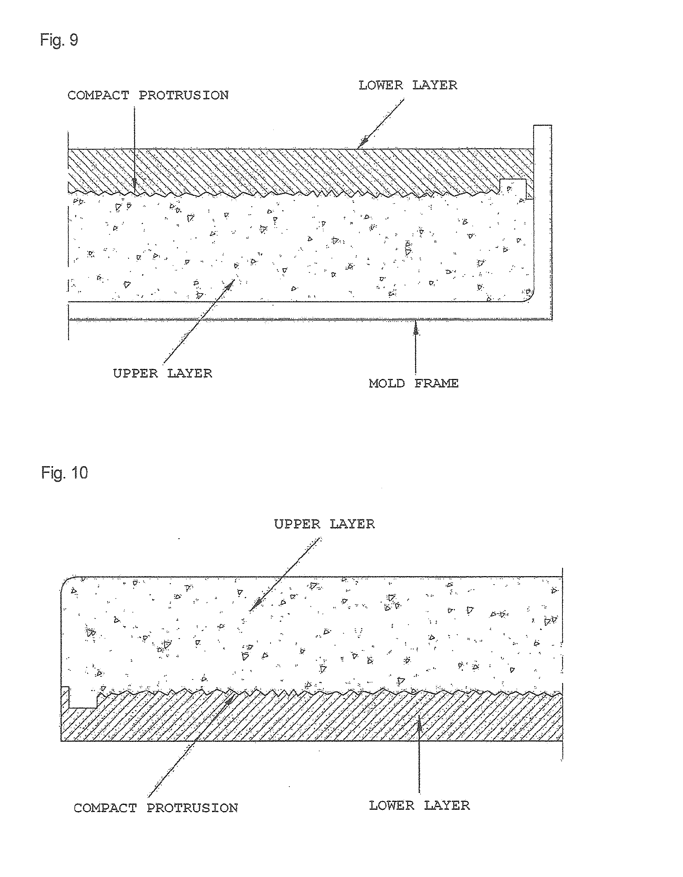

The lower layer with the compact protrusions, as aforementioned, may be put into the mold frame having the upper layer according to the method shown in FIG. 9.

FIG. 10 shows a cross-section of the composite elastic layer block mat in which the lower layer with the compact protrusions are adhered onto the upper layer.

## Claims

1. A method for manufacturing a composite elastic layer block mat having an upper layer and a lower layer, the method comprising manufacturing the upper layer sequentially by mixing 80 to 200 parts by weight of polyetherpolyol (molecular weight of triol is 600∼1000), 150 to 300 parts by weight of polyetherpolyol (molecular weight of diol is 1000∼3000), 0.1 to 0.4 parts by weight of anti-forming agent, 0.2 to 1 part by weight of antioxidant, 0.2 to 1 part by weight of UV stabilizer, 0.1 to 0.4 parts by weight of stannous catalyst, and 0.5 to 2 parts by weight of coloring pigment and stirring the mixture for 1 to 2 hours so as to prepare a main mixture, mixing and reacting 100 to 250 parts by weight of methylenebis phenyl diisocyanate, 50 to 500 parts by weight of polyetherpolyol (molecular weight of triol is 400∼2000) and 50 to 500 parts by weight of polyetherpolyol (molecular weight of diol is 400∼3000) so as to prepare a curing agent, mixing 1 to 9 parts by weight of the main mixture and 1 to 3 parts by weight of the curing agent, pouring the mixture by a thickness of 5 to 10 mm in a mold being vibrated with being installed on a ultrasonic vibrator, and putting the lower layer in the mold at the time point when the mixture is cured up to 3 to 5 mm thick from the bottom of the mold.

2. The method of claim 1, further comprising forming an intermediate layer by pouring onto the upper layer a mixture, in which 100 parts by weight of waste robber powder with a diameter of 1 to 3 mm and 10 to 30 parts by weight of urethane binder are mixed, to have a thickness of 10 to 25 mm.

3. The method of claim 1 or 2, wherein the lower layer is manufactured sequentially by mixing 70 to 90 parts by weight of resin mixture, in which 10 to 90% by weight of waste vinyl and 10 to 90% by weight of waste thermoplastic resin are mixed with each other, 5 to 20 parts by weight of calcium carbonate, 5 to 15 parts by weight of activator (mixed with 50% by weight of monoester, 35% by weight of diester and 15% by weight of triester) and 5 to 15 parts by weight of reformed azodicarbonamide (ADCA) foaming agent, allowing the mixture to pass through an extruding machine of 180 to 250°C to prepare a foam with a weight of 1.3 to 1.7, reforming the foam, putting the reformed foam into a molding machine to form protrusions which are 10 to 20 mm long on one surface of the foam, pressing end portions of the protrusions with a heating iron to form knobs, putting the resultant into a heater of 80 to 100°C to be thermally expanded, and placing the foam, which is in the thermally expanded state, on the upper layer or the intermediate layer in the mold frame.

4. The method of claim 3, further comprising processing a portion of the lower layer, coming in contact with the upper layer or the intermediate layer, using a primer, prior to placing the lower layer into the mold frame.

5. The method of claim 1, wherein the lower layer is manufactured sequentially by pushing a nylon cord material which is generated while grinding waste tire into an inlet of an extruding/regenerating machine of 200 to 300°C at speed of 250 to 500 kg/h, followed by applying heat thereto to generate a liquid phase, inserting the nylon cord material in the liquid phase through a punched net with a plurality of holes of 2 to 10 mm, mounted onto an outlet of the extruding/regenerating machine, to be discharged into a shape of noodle, water-cooling the noodle-shaped nylon cord material into pellets or chips of 1 to 10 mm in size, mixing 5 to 40% by weight of the nylon cord pellets or chips which are 1 to 10 mm great, 50 to 90% by weight of robber which is 1 to 10 mm great and 3 to 25% by weight of 1-component or 2-component binder to prepare a foam, reforming the foam, putting the reformed foam into a molding machine to obtain a molded product with compact protrusions on its one surface, putting the molded product into a heater of 80 to 100°C to be thermally expanded, and placing the molded product in the thermally expanded state in the mold frame such that a portion having the compact protrusions comes in contact with the upper layer.

6. The method of claim 1, wherein the lower layer is manufactured sequentially by pouring into a molding machine a mixture containing 60 to 80% by weight of robber powder of 5 to 7 mm, 10 to 30% by weight of robber powder of 2 to 3 mm and 7 to 20% by weight of phenolic resin in a shape of 150-200 mesh, which is melted at 60 to 80°C, so as to obtain a molded product with compact protrusions on its one surface, putting the molded product into a heater of 80 to 100°C to be thermally expanded, placing the molded product in the thermally expanded state in the mold frame such that a portion of the molded product with the compact protrusions comes in contact with the upper layer.

7. The method of claim 1, wherein the lower layer is manufactured sequentially by pouring into a molding machine a mixture containing 100 parts by weight of robber powder of 5 to 7 mm and 5 to 15 parts by weight of urethane-based binder, so as to obtain a molded product with compact protrusions on its one surface, putting the molded product into a heater of 80 to 100°C to be thermally expanded, and placing the molded product in the thermally expanded state in the mold frame such that a portion of the molded product with the compact protrusions comes in contact with the upper layer.

8. The method of claim 1, wherein the lower layer is manufactured sequentially by pouring into a molding machine a mixture containing 80 to 90% by weight of sand of 2 to 7 mm and 10 to 20% by weight of phenolic resin in a shape of 150-200 mesh, which is melted at 60 to 80°C, so as to obtain a molded product with compact protrusions on its one surface, putting the molded product into a heater of 80 to 100°C to be thermally expanded, and placing the molded product in the thermally expanded state in the mold frame such that a portion of the molded product having the compact protrusions comes in contact with the upper layer.

9. The method of claim 1, wherein the lower layer is manufactured sequentially by pouring into a molding machine a mixture containing 100 parts by weight of sand of 2 to 7 mm and 10 to 30 parts by weight of cement may with 10 to 30 parts by weight of water-soluble acryl resin and 10 to 30 parts by weight of water, so as to obtain a molded product with compact protrusions on its one surface, putting the molded product into a heater of 80 to 100°C to be thermally expanded, placing the molded product in the thermally expanded state in the mold frame such that a portion of the molded product having the compact protrusions comes in contact with the upper layer.

10. The method of claim 1, further comprising adhering a robber magnet or a ceramic permanent magnet onto the upper layer at the time point that the upper layer within the mold frame is cured by 2 to 3 mm.

11. The method of claim 1, further comprising adhering a wire or iron powders onto the upper layer at the time point that the upper layer within the mold frame is cured by 2 to 3 mm.

12. The method of claim 1, further comprising adhering a memory chip onto the upper layer at the time point that the upper layer within the mold frame is cured by 2 to 3 mm.

13. The method of claim 1, further comprising adhering an RFID/USN tag onto the upper layer at the time point that the upper layer within the mold frame is cured by 2 to 3 mm.
